# EUROPEAN PATENT APPLICATION

(11) **EP 1 833 183 A1**
(43) Date of publication of application: **12.09.2007**
(21) Application number: 07300798.1
(22) Date of filing: 19.02.2007
(51) Int. Cl.: H04J 3/06

(54) **Timing signal recovery and distribution apparatus and methods**

(30) Priority: 08.03.2006 US 370575
(71) Applicant: Alcatel Lucent, 75008 Paris (FR)
(72) Inventor: Dion, Pike, Stittsville Ontario K2S 1J6 (CA); Schriel, James Michael, Kanata Ontario K2W 1E4 (CA); Madsen, John, Ottawa Ontario K2K 3C6 (CA)
(74) Representative: Hervouet, Sylvie

(57) **Abstract**

Timing signal recovery and distribution apparatus and methods are disclosed. A timing synchronization source signal is selected from timing signals recovered by multiple communication devices. The timing signals may have any of multiple different frequencies. A timing distribution signal is generated by applying to the selected synchronization source signal one of multiple timing distribution signal generation schemes. The multiple generation schemes allow a timing distribution signal to be generated on the basis of synchronization source signals having respective different frequencies.

## Description

### Field of the Invention

This invention relates generally to communications and, in particular, to timing signal recovery and distribution.

### Background

Some electronic systems such as communication equipment employ internal timing distribution to clock various components. A system can typically generate a timing signal for distribution based on a recovered source signal that can have one and only one frequency. For example, one type of router in a communication network might use an 8kHz signal for its timing distribution, whereas another type of router might use a 19.44MHz signal.

This limitation can restrict the types of components, cost, and space associated with a device that is being designed for use in a system that uses internal timing distribution. A certain component from a particular vendor may be well suited for an input/output (I/O) electronic card design application but employ a different timing frequency than the equipment in which the I/O card is intended to be used. If the component employs an 8kHz signal and the equipment requires a 19.44MHz timing signal to generate its internal timing distribution signal, for example, external frequency conversion circuitry would have to be added to the I/O card in order for that card to be used as a synchronization source. Such additional circuitry increases costs and also occupies precious board space. These problems are compounded if there are several of these I/O cards in a system. In terms of board space alone, it is possible that customer features that require specific components would have to be removed in order to accommodate the additional frequency conversion circuitry.

This type of issue presents challenges in designing an internal timing distribution scheme for an electronic system. Determining which specific frequency to use for internal timing generation often reduces to considering a list of pros and cons, which can make re-use, cost, and board space less than optimal. Once a particular frequency is selected during system design, the internal timing distribution for that system is restricted to the selected frequency.

Another disadvantage of restricting system design to one frequency relates to emissions control. With multiple copies of a specific signal frequency, emissions can add in the frequency domain and cause compliance issues. Allowing signals at different frequencies, such as at 8kHz and 19.44MHz as noted above, "spreads out" the spectrum and can alleviate this problem.

Thus, there remains a need for improved timing distribution techniques.

### Summary of the Invention

Embodiments of the invention provide timing distribution schemes that remove at least some of the above restrictions imposed by using only a predetermined frequency in internal timing distribution. Internal timing distribution may use any of multiple frequencies, while still meeting the sensitive jitter specifications required of such timing.

Timing distribution becomes "dynamic" in some embodiments. Different I/O cards, or more generally different communication devices that recover timing signals, are allowed to support different timing frequencies to a timing distribution system, which might be provided on a central line processing card for instance.

According to an aspect of the invention, an apparatus includes a timing signal receiver for receiving, from respective timing recovery modules of a plurality of communication devices, recovered timing signals having any of a plurality of different frequencies. The apparatus also includes a selector, operatively coupled to the timing signal receiver, for selecting from the timing signals received by the timing signal receiver a timing synchronization source signal for the plurality of communication devices, the selected timing synchronization source signal having any of the plurality of different frequencies.

In some embodiments, the selector is configured for selecting a particular frequency of the plurality of different frequencies, for determining a frequency of each of the received timing signals, and for selecting the timing synchronization source signal from one or more of the received timing signals that have the particular frequency. The selector may be further configured for determining a type of each communication device in which the received timing signals were respectively recovered, and for determining the frequency of each of the received timing signals based on the determined type.

Where the selector is configured for detecting a loss of the selected timing synchronization source signal, the selector may be responsive to a detected loss of the selected timing synchronization source signal to select, from timing signals received by the timing signal receiver, another timing synchronization source signal.

The apparatus may also include a timing distribution module, operatively coupled to the selector, for receiving the selected timing synchronization source signal from the selector, for generating a timing distribution signal based on the selected timing synchronization source signal, and for distributing the timing distribution signal to the plurality of communication devices. The timing distribution module may be configured for generating the timing distribution signal at a timing distribution frequency, and for performing a frequency conversion operation where the frequency of the selected timing synchronization source signal is different from the timing distribution frequency.

In some embodiments, the selected timing synchronization source signal is a primary synchronization source signal, and the selector is configured for selecting another timing signal as a secondary synchronization source signal.

The apparatus may be implemented, for example, in communication equipment that also includes the plurality of communication devices. The apparatus and each communication device of the plurality of communication devices may be implemented on respective electronic circuit cards.

A method is also provided, and includes receiving timing signals recovered by respective timing recovery modules of a plurality of communication devices, each of the timing signals having any of a plurality of different frequencies, and selecting from the received timing signals a timing synchronization source signal for the plurality of communication devices, the selected timing synchronization source signal having any of the plurality of different frequencies.

The method may also include selecting a particular frequency of the plurality of different frequencies, and determining a frequency of each of the received timing signals, in which case selecting a timing synchronization source signal may involve selecting the timing synchronization source signal from one or more of the received timing signals that have the particular frequency.

In some embodiments, the method also includes determining a type of each communication device in which the received timing signals were respectively recovered, and determining a frequency involves determining the frequency of each of the received timing signals based on the determined type of each communication device.

The method may include detecting a loss of the selected timing synchronization source signal, and, responsive to detecting a loss of the selected timing synchronization source signal, selecting from one or more received timing signals another timing synchronization source signal.

Based on the selected timing synchronization source signal, a timing distribution signal may be generated and distributed to the plurality of communication devices.

If the operation of generating involves generating the timing distribution signal at a different timing distribution frequency, the method may also include performing a frequency conversion operation where the frequency of the selected timing synchronization source signal is different from the timing distribution frequency.

The selected timing synchronization source signal may be a primary synchronization source signal, in which case the method may also include selecting another timing signal as a secondary synchronization source signal.

As noted above, the plurality of communication devices may be implemented on respective electronic circuit cards.

The method may be embodied, for example, in a machine-readable medium storing instructions.

Another aspect of the invention provides an apparatus that includes a frequency determining module for determining a frequency of a timing synchronization source signal, the timing synchronization source signal comprising a timing signal selected from timing signals having any of a plurality of different frequencies recovered in respective communication devices, and a timing distribution signal generator, operatively coupled to the frequency determining module, for receiving the synchronization source signal, and for generating a timing distribution signal having a timing distribution frequency by applying to the synchronization source signal one of a plurality of timing distribution signal generation schemes, the plurality of timing distribution signal generation schemes comprising a respective timing distribution signal generation scheme for each frequency of the plurality of different frequencies, the one of the plurality of timing distribution signal generation schemes comprising the timing distribution signal generation scheme for the determined frequency of the synchronization source signal.

The plurality of different frequencies may include the timing distribution frequency. Each timing distribution signal generation scheme for a synchronization source signal frequency other than the timing distribution frequency may involve a respective frequency conversion operation for converting from the synchronization source signal frequency to the timing distribution frequency. The timing distribution signal generator may have a respective frequency converter implementing each respective frequency conversion operation.

Communication equipment that includes an equipment shelf having slots for receiving electronic circuit cards may also include an electronic circuit card comprising the apparatus and respective electronic circuit cards comprising the plurality of communication devices.

Other aspects and features of embodiments of the present invention will become apparent to those ordinarily skilled in the art upon review of the following description.

### Brief Description of the Drawings

Examples of embodiments of the invention will now be described in greater detail with reference to the accompanying drawings.

Fig. 1 is a block diagram of a communication system.

Fig. 2 is a block diagram of communication equipment.

Fig. 3 is a flow diagram of a timing recovery and distribution method.

### Detailed Description of Preferred Embodiments

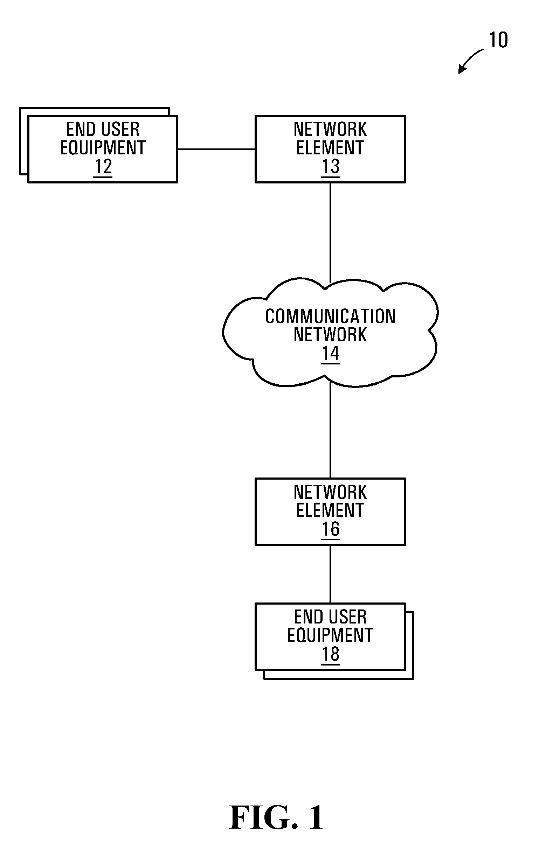

Fig. 1 is a block diagram of a communication system 10, in which some embodiments of the invention may be implemented. The communication system 10 includes end user communication equipment 12, 18, network elements 13, 16, and a communication network 14. Although many installations of end user equipment 12, 18 and network elements 13, 16 may be connected to the communication network 14, only two examples of each of these components have been labelled in Fig. 1 in order to avoid overly complicating the drawing. It should therefore be appreciated that the system of Fig. 1, as well as the contents of the other drawings, are intended solely for illustrative purposes, and that the present invention is in no way limited to the particular example embodiments explicitly shown in the drawings and described herein.

The end user equipment 12, 18 represents communication equipment that is configured to generate and transmit and/or to receive and terminate communication traffic. Although shown as being directly connected to the network elements 13, 16, it will be apparent that the end user equipment 12, 18 may communicate with the network elements 13, 16 through other components (not shown).

Switches and routers are illustrative of the types of communication equipment represented by the network elements 13, 16. The network elements 13, 16 provide access to the communication network 14 and thus have been shown separately in Fig. 1 for illustrative purposes.

The communication network 14, in addition to the border or edge network elements 13, 16, may also include intermediate network elements which route communication traffic through the communication network 14. It should be noted that, in some embodiments, the network 14 could, itself, consist of the network elements 13, 16. The network elements 13, 16 may thus be edge, core, or other types of communication equipment.

Many different types of end user, intermediate, and network communication equipment, as well as the operation thereof, will be apparent to those skilled in the art. In general, communication traffic originating with end user equipment 12, 18, and possibly other sources of communication traffic, for transfer to a remote destination through the communication network 14 is received by a network element 13, 16, translated between different protocols or formats if necessary, and routed through the communication network 14. In a particular example embodiment, the network elements 13, 16 exchange traffic with the end user communication equipment 12, 18 over Asynchronous Transfer Mode (ATM) or Synchronous Optical Network (SONET), using Packet over SONET (POS) mechanisms for instance, whereas the communication network 14 is an IP or MPLS network. However, it should be appreciated that embodiments of the invention are not limited to any particular types of communication equipment, transfer mechanisms, or protocols.

One common type of installation for communication network equipment such as the network elements 13, 16 includes an equipment rack carrying shelves that have multiple slots for receiving electronic circuit cards. The communication equipment may include hardware for supporting communications with the communication network 14 and for performing general processing of communication traffic. Electronic circuit cards such as line cards and I/O cards are then used in one or more of the slots to provide a medium- or protocol-specific interface. Using this kind of architecture, it tends to be easier to maintain spares for medium-specific modules in case of equipment failure, and substantially the same hardware core may be used in conjunction with various medium-specific modules.

Communication equipment such as the network elements 13, 16 may derive internal timing distribution signals from received communication signals. As noted above, different communication devices installed in such equipment, illustratively different I/O cards, may recover timing signals and present them to the system at different frequencies. However, a particular piece of communication equipment will typically generate internal timing based on only one specific, predetermined frequency. An internal timing distribution system can select a synchronization source signal to be used for internal timing from only those recovered timing signals that have the specific frequency.

According to an aspect of the present invention, a synchronization source signal may be selected from timing signals having any of multiple frequencies. Thus, communication devices that recover timing signals of various frequencies can be implemented in the same communication equipment. This provides flexibility in respect of synchronization sources and avoids the need for, and also the drawbacks associated with, per-device frequency conversion circuitry.

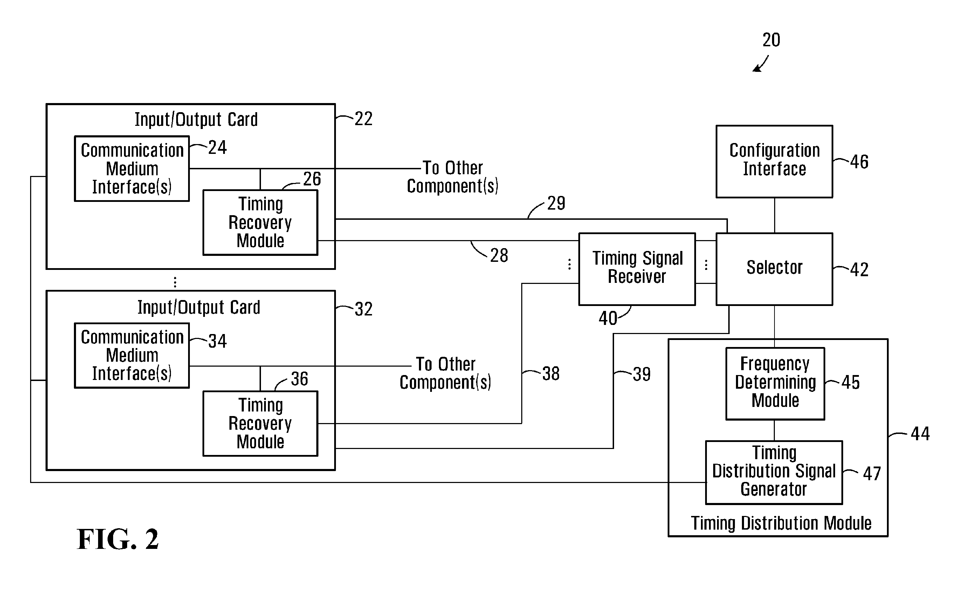

Fig. 2 is a block diagram of communication equipment. The equipment shown in Fig. 2 may be implemented in a network element such as the network elements 13, 16 of Fig. 1, for example.

The equipment 20 includes a plurality of communication devices shown as I/O cards 22, 32, a timing signal receiver 40 operatively coupled to the timing recovery modules 26, 36 of the I/O cards 22, 32, a selector 42 operatively coupled to the timing signal receiver 40 and to the I/O cards 22, 32, a timing distribution module 44 operatively coupled to the selector 42, and a configuration interface 46 operatively coupled to the selector 42. Each of the I/O cards 22, 32 includes one or more communication medium interface(s) 24, 34 and a respective timing recovery module 26, 36. The timing distribution module 44 includes a frequency determining module 45 and a timing distribution signal generator 47.

It should be appreciated that the particular structure shown in Fig. 2 is intended solely for the purposes of illustration, and not to limit the invention.

For example, communication equipment in which an embodiment of the invention is implemented may include more or fewer communication devices, of similar or different types, than the two I/O cards 22, 32 specifically shown. Other components might also be provided to process communication traffic that is received on or is to be transmitted through the communication medium interface(s) 24, 34.

The types of connections through which the components of Fig. 2 are operatively coupled may, to at least some extent, be implementation-dependent. Communication equipment components often use various types of physical connectors and wired connections such as midplane and backplane conductors, although the present invention is in no way limited to wired connections. In the case of cooperating software functions, for example, an operative coupling may be through variables or registers, and thus moreso a logical coupling than a physical coupling.

Referring first to the I/O cards 22, 32, the communication medium interface(s) 24, 34 provide one or more interfaces to respective communication media. These interfaces may include, for example, communication ports for connection to physical communication lines, or I/O modules for connection to components such as line cards that enable communication traffic to be exchanged with other communication devices or equipment. The interface(s) 24, 34 may thus be directly or indirectly coupled to communication media.

In one embodiment, the communication medium interface(s) 24, 34 handle communication traffic of different types, and the timing recovery modules 26, 36 recover timing signals that have different frequencies. Those skilled in the art will be familiar with many timing recovery schemes that may be used to recover timing signals from a communication line or medium.

The present invention is not restricted to any specific mechanism for recovering timing signals from communication signals received through the communication medium interface(s) 24, 34. Timing recovery may include such operations as extracting timing signals from communication signals and/or synchronizing locally generated timing signals to the timing on a communication line. Explicit timing signals thus need not necessarily be received by a timing recovery module 26, 36. Timing recovery might also or instead involve operations above the electrical signal level, as in the case of recovering or generating timing based on messages exchanged between communication equipment or components.

Embodiments of the invention are applicable to any of these, and possibly other, timing recovery or generation mechanisms. References herein to timing recovery and recovered timing signals should be interpreted accordingly.

Hardware, software, firmware, or combinations thereof may be used to implement the communication medium interface(s) 24, 34, and similarly the timing recovery modules 26, 36. Components that may be suitable for implementing the interface(s) 24, 34 and/or the timing recovery modules 26, 36 may include, among others, microprocessors, microcontrollers, programmable logic devices (PLDs), Field Programmable Gate Arrays (FPGAs), Application Specific Integrated Circuits (ASICs), and other types of "intelligent" integrated circuits.

The timing signal receiver 40 may similarly be implemented using hardware, software, firmware, or some combination thereof. In some embodiments, the timing signal receiver 40 is a physical connector that receives timing signals over conductors that connect to timing signal outputs of the timing recovery modules 26, 36. A timing recovery module 26, 36 might provide recovered timing signals at particular output pins or conductors that are coupled to backplane conductors in a communication equipment rack or shelf when an I/O card 22, 32 is installed in a card slot. In this case, the timing signal receiver 40 might be another connector or simply a collection of one or more conductors through which recovered timing signals are provided to the selector 42. The card slot connectors and conductors represent examples of communication device interfaces through which the timing signal receiver 40 may be coupled to the I/O cards.

The selector 42, another component that could be implemented in hardware, software, and/or firmware, receives recovered timing signals from the timing signal receiver 40 and is also operatively coupled to the I/O cards 22, 32 as shown at 29, 39. The selector 42 may be operable to perform such functions as detecting card installations, removals, or changes, and determining card types, for example. In this case, physical connections 29, 39 provided on an equipment shelf backplane might allow card identifiers and other information to be transferred to the selector 42. Other types of operative coupling between the selector 42 and the I/O cards 22, 32 are also contemplated.

It may be desirable to allow an operator, operating system or control software, or some other entity to configure certain parameters used by the selector 42. For example, control software might be used to notify the selector 42 of the slots in which cards have been installed, the type of each card, and the frequency of the timing signal recovered by each card, where the selector 42 does not itself detect or otherwise determine such parameters. The configuration interface 46 provides these features, and may thus include user input and output devices such as a keyboard, a mouse, and a display, a software interface such as an Application Programming Interface (API) or a mechanism for accessing registers or data stores used by the selector 42, and/or other types of interfaces.

Actual selection of a synchronization source signal by the selector 42 may involve controlling a multiplexer or other component that receives recovered timing signals. Other implementations of the selector 42 are also possible.

The timing distribution module 44 may include hardware, software, and/or firmware components for generating a timing distribution signal on the basis of a recovered timing signal selected as a timing synchronization source signal by the selector 42. In the example shown in Fig. 2, these components include a frequency determining module 45 and a timing distribution signal generator 47. One or more frequency converters, many examples of which will be apparent to those skilled in the art, may be provided in the timing distribution signal generator 47 for converting the selected timing synchronization source signal into a timing distribution signal where the frequency of the selected timing synchronization source signal is different from a frequency that is distributed by the timing distribution module 44. It should be noted that frequency conversion circuitry in the timing distribution signal generator 47 allows the timing distribution module 44 to use a timing synchronization source signal having any of multiple different frequencies, without using per-card frequency conversion circuitry for each timing recovery module 26, 36. Frequency conversion for internal timing distribution would be handled, if necessary, by the timing distribution signal generator 47.

In operation, the timing signal receiver 40 receives timing signals recovered by the timing recovery modules 26, 36. As noted above, the recovered timing signals may have any of a plurality of different frequencies, and not just a particular predetermined frequency.

The selector 42 selects, from timing signals received by the timing signal receiver 40, a timing synchronization source signal to be used in generating a timing distribution signal. In an implementation such as an equipment shelf/card architecture in which communication devices may be installed and removed, the timing signal receiver 40 and thus the selector 42 may actually receive different recovered timing signals at different times, in accordance with the particular cards that are currently installed. Whether one timing signal or more than one timing signal is actually received, the timing signal receiver 40 remains operable to receive recovered timing signals at multiple different frequencies, and the selector 42 is able select from the recovered timing signal(s) a timing signal having any of those frequencies.

During the selection process, the selector 42 may select one particular frequency of the plurality of frequencies, and determine the frequency of each recovered timing signal. A synchronization source signal may then be selected from any recovered timing signal(s) that have the particular frequency. For example, under certain conditions, the selector 42 might select a higher- or lower-frequency timing signal. A preferred timing signal frequency could also or instead be forced, by configuring the selector 42 through the configuration interface 46.

One possible mechanism for determining recovered timing signal frequencies involves the selector 42 determining a type of each communication device, the I/O cards 22, 32 in Fig. 2. The connections 29, 39 may allow the selector 42 to make type determinations based on card identifiers or other information that may be requested from the cards 22, 32 or automatically transmitted to the selector 42 when each card is installed in a card slot. In one embodiment, the selector 42 then determines the frequency of a timing signal that should be recovered by the identified card type, using a lookup table that maps card types and frequencies, for example. As described above, the selector 42 might also or instead determine card types and/or frequencies based on information entered or otherwise provided to the selector through the configuration interface 46.

The selector 42 may also select another recovered timing signal as a secondary timing synchronization source signal to be used, in the event of a loss of the selected primary timing synchronization source signal, for generating a timing distribution signal. A timing signal might be lost due to a card being removed or replaced, a card failure, or some other problem, for example. Primary and secondary synchronization source signals may, but need not necessarily, have the same frequency.

Such a secondary synchronization source signal could be selected at the same time as a primary source signal, in which case the selector 42 selects two timing signals from the same set of recovered timing signals. Both the primary synchronization source signal and the secondary synchronization source signal selected by the selector 42 could be provided to the timing distribution module 44. The timing distribution module 44 normally uses the primary synchronization source signal for timing distribution signal generation, and switches to the secondary synchronization source signal if the primary source signal is lost.

In another embodiment, the secondary synchronization source signal is not necessarily selected from the same set of recovered timing signals as the previous, now failed, synchronization source signal. For example, the failed source signal would generally not be included for the purposes of selecting a secondary source signal. In addition, the particular I/O cards 22, 32 installed in the equipment 20 may have changed since the failed timing signal was selected by the selector 42. As noted above, the primary and secondary synchronization source signals might have the same or different frequencies.

Loss of a selected timing synchronization source signal may be detected by the selector 42 itself, or by another component and subsequently reported to the selector 42. When one selected timing synchronization source signal is lost, another recovered timing signal is selected by the selector 42 as a new synchronization source signal, if a secondary source signal had not already been selected, and used for generating a timing distribution signal.

The timing distribution module 44 receives the selected timing synchronization source signal from the selector 42, and generates a timing distribution signal based on the selected timing synchronization source signal. Where primary and secondary synchronization source signals are provided to the timing distribution signal module 44, the primary source signal is normally used, and the secondary source signal is used in the event of a loss of the primary source signal.

According to an aspect of the invention, the timing distribution module 44 is able to use a synchronization source signal at any of multiple frequencies. Where a timing distribution signal having a particular timing distribution frequency is to be distributed to the I/O cards 22, 32, different timing distribution signal generation schemes may be applied to synchronization source signals that have different frequencies.

The frequency determining module 45 determines the frequency of a current timing synchronization source signal. This determination may involve detecting a frequency of the synchronization source signal, for example. In another embodiment, the frequency determining module 45 receives an indication of synchronization source signal frequency from another component. For instance, the selector 42 might output both a synchronization source signal and a frequency indication to the frequency determining module 45.

A particular one of a plurality of timing distribution signal generation schemes is applied to the synchronization source signal by the timing distribution signal generator 47, to thereby generate a timing distribution signal. The timing distribution signal generator 47 supports a respective generation scheme for each possible synchronization source signal frequency, and at any time applies the particular scheme for the determined frequency of the current synchronization source signal.

The selection of an appropriate generation scheme for a current synchronization source signal may be made by the frequency determining module 45 or by the timing distribution signal generator 47. In the former case, the frequency determining module 45 might output a command or other control information to the timing distribution signal generator 47 or enable a particular generation scheme, for example. If the timing distribution signal generator 47 itself determines the appropriate generation scheme, then it would select a generation scheme based on the frequency determined by the frequency determining module 45, and invoke a software module implementing that scheme or input the synchronization source signal to a specific frequency converter for instance.

Timing distribution signal generation schemes may involve signal conversions such as frequency conversion operations. Frequency conversions may be implemented in the timing distribution signal generator 47, illustratively by using frequency converters for converting from respective synchronization source signal frequencies to a timing distribution frequency.

It should be noted that frequency conversion is one example of an operation that may be involved in generating a timing distribution signal from a synchronization source signal. Where a synchronization source signal frequency is the same as the timing distribution frequency, a frequency conversion might not be performed. Thus, all timing distribution signal generation schemes need not include the same operations.

As shown in Fig. 2, the timing distribution module 44, and specifically the timing distribution signal generator 47 in the example shown in Fig. 2, distributes the timing distribution signal to each I/O card 22, 32 from which a recovered timing signal was received. This may involve driving a bus or set of conductors such as differential pair tracks with the selected timing synchronization signal or a frequency converted version of the selected timing synchronization signal, for example. In some embodiments, the timing distribution signal is also distributed to other components, which could include communication devices that do not provide recovered timing signals. Whether the components to which the timing distribution signal is distributed actually use the internal distributed timing, and how the internal timing is used, are generally dependent upon device-specific configurations. Devices may clock none, some, or all of their internal components from the timing distribution signal.

The actual distribution of the timing distribution signal is controlled in some embodiments, such as by selectively enabling or disabling particular outputs or connections. For example, it may be desirable to disable a connection that provides timing to a card slot if no card has been installed in that slot or a card that is currently located in a slot has not yet been configured for operation. The selector 42 or another component that detects cards in card slots could be configured to provide enable signals to the timing distribution module 44 for instance, although other distribution control mechanisms may also or instead be used.

From the foregoing, it will be apparent that embodiments of the invention provide flexibility in terms of both timing signal frequency and the selection of particular recovered timing signals as synchronization source signals for internal timing distribution.

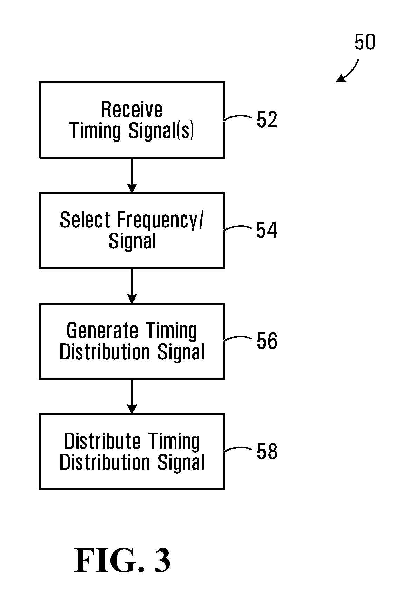

Although described above primarily in the context of a system or apparatus, the techniques disclosed herein may also be implemented other forms, as a method for instance. Fig. 3 is a flow diagram of a timing recovery and distribution method according to an embodiment of the invention.

The method 50 begins at 52 with an operation of receiving timing signals recovered by respective timing recovery modules in one or more communication devices. Each of the timing signals may have any of a plurality of different frequencies.

At 54, a timing synchronization source signal to be used in generating a timing distribution signal is selected from the received timing signals. As shown, and also described above, this may involve selecting a particular frequency, determining a frequency of each of the received timing signals, and selecting a timing synchronization source signal from any received timing signals that have the particular frequency. The determination of frequency for a specific timing signal may be based on a type of the communication device in which the timing signal was recovered.

The timing distribution signal is then generated at 56 based on the selected timing synchronization source signal, by performing a frequency conversion in some embodiments, and distributed at 58.

The method 50 is illustrative of one embodiment of the invention. Other embodiments may involve further, fewer, or different operations performed in a similar or different order. For example, the receiving operation at 52 may be ongoing, with the recovered timing signals received at 52 changing as communication devices are installed and removed. Another variation entails repeating the selecting operation(s) at 54 to select a secondary synchronization source signal. Secondary source signal selection may be performed at substantially the same time as primary source signal selection, or triggered by a signal loss. In the latter case, a method may include an operation of monitoring timing signals, or at least a selected timing signal, to detect a signal loss.

Further variations may be or become apparent to those skilled in the art.

Embodiments of the invention add a "dynamic" aspect to timing distribution. Different communication devices, illustratively I/O cards, can employ different frequencies as would be optimal for their own respective designs. This may allow devices to be optimized for cost, space, and features. Internal timing systems that work with those devices also become flexible in accommodating multiple devices and their different optimal timing frequencies.

Communication equipment implementing the techniques disclosed herein can thus be significantly more flexible, and allow more cost effective and feature-rich design, than currently available equipment.

Implementations of the techniques disclosed herein may also avoid jitter and possibly other forms of timing signal degradation, which would adversely affect a system. A multiplexer for synchronization source signal selection and timing distribution medium elements such as Low Voltage Differential Signalling (LVDS) buffers and differential pair tracks for distributing timing could be added to an internal timing distribution system without substantially degrading a distributed timing signal.

What has been described is merely illustrative of the application of principles of embodiments of the invention. Other arrangements and methods can be implemented by those skilled in the art without departing from the scope of the present invention.

For example, the division of functions shown in Fig. 2 and described above are intended solely for illustrative purposes. The functions disclosed herein may be provided by fewer or more components than explicitly shown.

In respect of primary and secondary synchronization source signals for instance, the selector 42 could select and output to the timing distribution module 44 both a primary synchronization source signal and a secondary synchronization source signal, and the timing distribution module 44 switches from the primary source signal to the secondary source signal in the event of a primary source signal loss.

Timing signal selection might also be implemented differently than shown in Fig. 2. According to another embodiment, a frequency selector is operatively coupled to the timing signal receiver 40 and is operable to select a particular frequency, and a timing signal selector is operatively coupled to the frequency selector. The timing signal selector is operable to select, from one or more recovered timing signals having the particular frequency, a timing signal to be used in generating a timing distribution signal for distribution to the one or more communication devices.

The interconnections between the illustrated components may also be different than shown. The timing distribution signal generator 47, for example, might receive a selected synchronization source signal from the selector 42 instead of from the frequency determining module 45.

Other such variations are also possible without departing from the present invention.

In addition, although described primarily in the context of methods and systems, other implementations of the invention are also contemplated, as instructions stored on a machine-readable medium for example.

## Claims

1. An apparatus comprising:
a timing signal receiver for receiving, from respective timing recovery modules of a plurality of communication devices, recovered timing signals having any of a plurality of different frequencies; and
a selector, operatively coupled to the timing signal receiver, for selecting from the timing signals received by the timing signal receiver a timing synchronization source signal for the plurality of communication devices, the selected timing synchronization source signal having any of the plurality of different frequencies.

2. The apparatus of claim 1, wherein the selector is configured for selecting a particular frequency of the plurality of different frequencies, for determining a frequency of each of the received timing signals, and for selecting the timing synchronization source signal from one or more of the received timing signals that have the particular frequency.

3. The apparatus of claim 2, wherein the selector is further configured for determining a type of each communication device in which the received timing signals were respectively recovered, and for determining the frequency of each of the received timing signals based on the determined type.

4. The apparatus of any one of claims 1 to 3, wherein the selector is further configured for detecting a loss of the selected timing synchronization source signal, the selector being responsive to a detected loss of the selected timing synchronization source signal to select, from timing signals received by the timing signal receiver, another timing synchronization source signal.

5. The apparatus of any one of claims 1 to 4, further comprising:
a timing distribution module, operatively coupled to the selector, for receiving the selected timing synchronization source signal from the selector, for generating a timing distribution signal based on the selected timing synchronization source signal, and for distributing the timing distribution signal to the plurality of communication devices.

6. The apparatus of claim 5, wherein the timing distribution module is configured for generating the timing distribution signal at a timing distribution frequency, and for performing a frequency conversion operation where the frequency of the selected timing synchronization source signal is different from the timing distribution frequency.

7. The apparatus of any one of claims 1 to 3, wherein the selected timing synchronization source signal comprises a primary synchronization source signal, and wherein the selector is configured for selecting another timing signal as a secondary synchronization source signal.

8. Communication equipment comprising:
the apparatus of any one of claims 1 to 7; and
the plurality of communication devices.

9. The communication equipment of claim 8, wherein the apparatus and each communication device of the plurality of communication devices are implemented on respective electronic circuit cards.

10. A method comprising:
receiving timing signals recovered by respective timing recovery modules of a plurality of communication devices, each of the timing signals having any of a plurality of different frequencies; and
selecting from the received timing signals a timing synchronization source signal for the plurality of communication devices, the selected timing synchronization source signal having any of the plurality of different frequencies.

11. The method of claim 10, further comprising:
selecting a particular frequency of the plurality of different frequencies; and
determining a frequency of each of the received timing signals,
wherein selecting a timing synchronization source signal comprises selecting the timing synchronization source signal from one or more of the received timing signals that have the particular frequency.

12. The method of claim 11, further comprising:
determining a type of each communication device in which the received timing signals were respectively recovered,
wherein determining a frequency comprises determining the frequency of each of the received timing signals based on the determined type of each communication device.

13. The method of any one of claims 10 to 12, further comprising:
detecting a loss of the selected timing synchronization source signal; and
responsive to detecting a loss of the selected timing synchronization source signal, selecting from one or more received timing signals another timing synchronization source signal.

14. The method of any one of claims 10 to 13, further comprising:
generating a timing distribution signal based on the selected timing synchronization source signal; and
distributing the timing distribution signal to the plurality of communication devices.

15. The method of claim 14, wherein generating comprises generating the timing distribution signal at a timing distribution frequency, the method further comprising:
performing a frequency conversion operation where the frequency of the selected timing synchronization source signal is different from the timing distribution frequency.

16. The method of any one of claims 10 to 12, wherein the selected timing synchronization source signal comprises a primary synchronization source signal, the method further comprising:
selecting another timing signal as a secondary synchronization source signal.

17. The method of any one of claims 10 to 16, wherein the plurality of communication devices are implemented on respective electronic circuit cards.

18. A machine-readable medium storing instructions which when executed perform the method of any one of claims 10 to 17.

19. An apparatus comprising:
a frequency determining module for determining a frequency of a timing synchronization source signal, the timing synchronization source signal comprising a timing signal selected from timing signals having any of a plurality of different frequencies recovered in respective communication devices; and
a timing distribution signal generator, operatively coupled to the frequency determining module, for receiving the synchronization source signal, and for generating a timing distribution signal having a timing distribution frequency by applying to the synchronization source signal one of a plurality of timing distribution signal generation schemes, the plurality of timing distribution signal generation schemes comprising a respective timing distribution signal generation scheme for each frequency of the plurality of different frequencies, the one of the plurality of timing distribution signal generation schemes comprising the timing distribution signal generation scheme for the determined frequency of the synchronization source signal.

20. The apparatus of claim 19, wherein the plurality of different frequencies comprises the timing distribution frequency, and wherein each timing distribution signal generation scheme for a synchronization source signal frequency other than the timing distribution frequency comprises a respective frequency conversion operation for converting from the synchronization source signal frequency to the timing distribution frequency.

21. The apparatus of claim 20, wherein the timing distribution signal generator comprises a respective frequency converter implementing each respective frequency conversion operation.

22. Communication equipment comprising:
an equipment shelf having slots for receiving electronic circuit cards;
an electronic circuit card comprising the apparatus of any one of claims 19 to 21; and
respective electronic circuit cards comprising the plurality of communication devices.
